# EUROPÄISCHE PATENTSCHRIFT

(11) **EP 2 823 617 B1**
(45) Veröffentlichungstag und Bekanntmachung des Hinweises auf die Patenterteilung: **11.07.2018**
(21) Anmeldenummer: 12725716.0
(22) Anmeldetag: 31.05.2012
(51) Int. Cl.: G06F 9/54, H04L 29/08, H04L 29/06

(54) **KOMMUNIKATION ZWEIER CLIENTS ÜBER EINEN SERVER**
COMMUNICATION BETWEEN TWO CLIENTS VIA A SERVER
COMMUNICATION DE DEUX CLIENTS PAR L'INTERMÉDIAIRE D'UN SERVEUR

(43) Veröffentlichungstag der Anmeldung: 14.01.2015
(73) Patentinhaber: Siemens Aktiengesellschaft, 80333 München (DE)
(72) Erfinder: VOLKMANN, Frank, 90475 Nürnberg (DE); ERLMANN, Markus, 95336 Mainleus (DE); HOCK, Christian, 90763 Fürth (DE)
(86) Internationale Anmeldenummer: PCT/EP2012/060257
(87) Internationale Veröffentlichungsnummer: WO 2013/178269

(56) Entgegenhaltungen:
- Microport: "OPC Storage (OPC-EC-BCL-S)", , 28. Juli 2010 (2010-07-28), Seiten 1-3, XP055052649, Gefunden im Internet: URL:http://www.microport.com.tw/product-DM /softing/OPC_Server/Connect/OPC Storage(OPC-EC-BCL-S)-en.pdf [gefunden am 2013-02-07]
- "Effectively Employ OPC Communications", , 24. Juli 2008 (2008-07-24), XP055052663, Gefunden im Internet: URL:http://www.automationworld.com/print/4 312 [gefunden am 2013-02-07]
- OPC FOUNDATION: "OPC Unified Architecture Specification Part:1 Overview and Concepts, Release 1.01", 20090205, [Online] Nr. Release 1.01, 5. Februar 2009 (2009-02-05), Seiten 1-20, XP002630848, Gefunden im Internet: URL:https://www.opcfoundation.org/Download s.aspx/UnifiedArchitecture/OPCUAPart1-Over viewandConcepts1.01Specification.zip?RI=41 4> [gefunden am 2011-03-31]
- VU VAN TAN ET AL: "A SOA-Based Framework for Building Monitoring and Control Software Systems", 16. September 2009 (2009-09-16), EMERGING INTELLIGENT COMPUTING TECHNOLOGY AND APPLICATIONS. WITH ASPECTS OF ARTIFICIAL INTELLIGENCE, SPRINGER BERLIN HEIDELBERG, BERLIN, HEIDELBERG, PAGE(S) 1013 - 1027, XP019154971, ISBN: 978-3-642-04019-1 Seiten 1013-1027, Seite 1018 - Seite 1021

## Beschreibung

Die Erfindung betrifft die Kommunikation zweier Clients über einen Server in einem Netzwerk mittels OPC-UA.

OPC-UA (= OPC Unified Architecture) ist ein Kommunikationsprotokoll und Informationsmodell zur Kommunikation unterschiedlicher automatisierungstechnischer Komponenten (Geräte), siehe http://www.opcfoundation.org.

OPC-UA unterliegt einem strengen Client-Server-Modell, d.h. Server stellen Informationen zur Verfügung, die Clients von den Servern abfragen. Die Kommunikation zwischen einem Client und einem Server wird dabei vom Client initiiert, beginnt also immer beim Client und ist somit asymmetrisch. Sollen zwei Komponenten (Geräte) gleichberechtigt (symmetrisch) miteinander kommunizieren, müssen heute beide gleichzeitig Client und Server sein. Da es auf der Transportebene Einschränkungen gibt, wo sich Clients und Server im Netz befinden können, kann nicht in jeder Situation jeder Client auch zum Server gemacht werden. Außerdem erfordert gleichzeitige Client- und Serverfunktionalität kommunizierender Geräte einen höheren Aufwand an Entwicklung und Ressourcen auf beiden Geräten. Dieser Aufwand ist insbesondere im Feldbereich oft nicht vertretbar, da die dort eingesetzten Geräte und Netze häufig relativ leistungsschwach sind.

In "OPC Storage (OPC-EC-BCL-S), XP055052649, ist ein OPC "Gateway" beschrieben, welcher einen OPC Server simulieren kann und Daten von einem OPC Client zu einem andere OPC Client übertragen kann. Unter anderem bietet diese Software die Möglichkeit, einen namespace zu definieren.

In "Effectively Emply OPC Communications", published on the Automation World Weg site, XP055052663, wird eine Softwarelösung namens OPC Easy Connect beschrieben, welche das Protokoll DCOM umgeht mittels einer Tunnel-Lösung.

Als neueste aller OPC-Spezifikationen der OPC Foundation unterscheidet sich OPC UA erheblich von seinen Vorgängern, insbesondere durch die Fähigkeit, Maschinendaten (Regelgrößen, Messwerte, Parameter usw.) nicht nur zu transportieren, sondern auch maschinenlesbar semantisch zu beschreiben.
Der Erfindung liegt die Aufgabe zugrunde, ein Verfahren zur Kommunikation zweier Clients in einem Netzwerk mittels OPC-UA anzugeben.

Die Aufgabe wird erfindungsgemäß hinsichtlich des Verfahrens durch die Merkmale des Anspruchs 1 gelöst.

Vorteilhafte Ausgestaltungen der Erfindung sind Gegenstand der Unteransprüche.

Bei dem erfindungsgemäßen Verfahren zur Kommunikation zweier Clients über einen Server in einem Netzwerk mittels OPC-UA wird in dem Server ein virtuelles Server-Objekt implementiert, das einem ersten der beiden Clients eine Funktionalität eines Servers verleiht, indem es für den ersten Client einen virtuellen Adressraum in einem Adressraum des Servers und eine Methode zur Erzeugung und Änderung virtueller Server-Knoten in dem virtuellen Adressraum bereitstellt. Der Server ermöglicht dem zweiten Client, auf virtuelle Server-Knoten in dem virtuellen Adressraum zuzugreifen und teilt dem ersten Client jeden Zugriff des zweiten Client auf einen virtuellen Server-Knoten in dem virtuellen Adressraum mit.

Unter einem Knoten und einem virtuellen Server-Knoten wird in dieser Anmeldung stets ein OPC-UA-Knoten (OPC-UA node) verstanden, wobei sich der Begriff virtueller Server-Knoten auf einen in dem virtuellen Adressraum des Servers angelegten OPC-UA-Knoten bezieht. Entsprechend wird unter einem Client immer ein OPC-UA-Client und unter einem Server immer ein OPC-UA-Server verstanden.

Die Erfindung ermöglicht es, einem Client Serverfunktionalität zu verleihen. Dazu wird in einem Server ein virtuelles Server-Objekt implementiert. Dadurch lassen sich insbesondere Clients mit Serverfunktionen versehen, die sich nicht als selbständige Server nutzen lassen. Dies wird vorteilhaft erreicht, ohne die OPC-UA-Spezifikation zu ändern oder zu erweitern, so dass die OPC-UA-Spezifikation nicht verletzt wird und alle OPC-UA-Geräte mit der erfindungsgemäßen Implementierung der Serverfunktionalität für Clients umgehen können.

In einer bevorzugten Ausgestaltung der Erfindung sind mittels der Methode zur Erzeugung und Änderung virtueller Server-Knoten als virtuelle Server-Knoten Variablen erzeugbar und als Änderung einer Variable ist ein Wert der Variable veränderbar.

Diese Ausgestaltung ermöglicht es einem ersten Client vorteilhaft, Variablen anzulegen, deren Werte von dem zweiten Client gelesen werden können, und die Werte dieser Variablen zu ändern.

In einer besonders bevorzugten Ausgestaltung der Erfindung erzeugt der Server für den ersten Client eine Subscription, über die der Server dem ersten Client jeden Zugriff des zweiten Client auf einen virtuellen Server-Knoten in dem virtuellen Adressraum mitteilt.

Unter einer Subscription wird dabei eine OPC-UA-Subscription verstanden.

Durch diese Ausgestaltung wird also eine OPC-UA-Subscription verwendet, um dem ersten Client Zugriffe auf virtuelle Server-Knoten mitzuteilen. Dadurch wird vorteilhaft eine in OPC-UA bereits vorhandene Struktur zur Mitteilung derartiger Zugriffe verwendet, so dass keine zusätzliche Struktur implementiert werden muss und die OPC-UA-Spezifikation nicht zu diesem Zweck verändert oder erweitert werden braucht.

Die Subscription enthält dabei vorzugsweise eine Subscription-Entität, auf deren Änderung der erste Client angemeldet wird und die der Server bei einem Zugriff des zweiten Client auf einen virtuellen Server-Knoten in dem virtuellen Adressraum ändert. Besonders bevorzugt wird als Subscription-Entität eine Subscription-Variable verwendet, auf deren Wertänderung der erste Client angemeldet wird und deren Wert der Server bei einem Zugriff des zweiten Client auf einen virtuellen Server-Knoten in dem virtuellen Adressraum ändert.

Dadurch wird dem ersten Client in einfacher Weise ein Zugriff auf einen virtuellen Server-Knoten über eine Änderung der Subscription-Entität, insbesondere über eine Wertänderung der Subscription-Variable, mitgeteilt.

Vorzugsweise wird die Subscription von dem virtuellen Server-Objekt erzeugt.

Dadurch werden der virtuelle Adressraum und die Subscription vorteilhaft von demselben virtuellen Server-Objekt angelegt, so dass kein zusätzliches Objekt zum Anlegen der Subscription implementiert werden muss.

Ferner meldet sich der erste Client bei dem virtuellen Server-Objekt vorzugsweise durch einen Methodenaufruf an.

Dadurch wird die Anmeldung des ersten Client bei dem virtuellen Server-Objekt in einfacher Weise realisiert.

Der zweite Client kann vorzugsweise auch ein Server sein.

Dadurch können auch Server die Serverfunktionalität des ersten Client nutzen.

Erfindungsgemäße Hardware ist zur Durchführung des erfindungsgemäßen Verfahrens ausgebildet und ermöglicht somit die Realisierung der oben genannten Vorteile dieses Verfahrens.

Ein erfindungsgemäßer Client ist dementsprechend dazu ausgebildet, sich bei einem virtuellen Server-Objekt eines Servers anzumelden und eine Methode des virtuellen Server-Objekts zur Erzeugung und Änderung virtueller Server-Knoten in einem von dem virtuellen Server-Objekt erzeugten virtuellen Adressraum in einem Adressraum des Servers aufzurufen.

In einem erfindungsgemäßen Server ist ein virtuelles Server-Objekt implementiert, bei dem sich ein Client anmelden kann und das einem bei ihm angemeldeten Client eine Funktionalität eines Servers verleiht, indem es für den Client einen virtuellen Adressraum in einem Adressraum des Servers und eine Methode zur Erzeugung und Änderung virtueller Server-Knoten in dem virtuellen Adressraum bereitstellt.

Dabei erzeugt das virtuelle Server-Objekt für einen sich bei ihm anmeldenden ersten Client vorzugsweise eine Subscription, über die der Server dem ersten Client jeden Zugriff eines zweiten Client auf einen virtuellen Server-Knoten in dem virtuellen Adressraum mitteilt.

Ein erfindungsgemäßes Netzwerk umfasst wenigstens einen erfindungsgemäßen Client und wenigstens einen erfindungsgemäßen Server.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen Zustand eines Servers, in dem ein virtuelles Server-Objekt implementiert ist, vor einer Anmeldung eines Client bei dem virtuellen Server-Objekt,
- FIG 2: eine Anmeldung eines ersten Client bei dem virtuellen Server-Objekt des in Figur 1 dargestellten Servers,
- FIG 3: einen Zustand des in Figur 1 dargestellten Servers nach der Anmeldung eines ersten Client bei dem virtuellen Server-Objekt,
- FIG 4: das Anlegen eines virtuellen Server-Knotens durch einen ersten Client mittels des virtuellen Server-Objekts des in Figur 1 dargestellten Servers,
- FIG 5: einen Zustand des in Figur 1 dargestellten Servers nach dem Anlegen eines virtuellen Server-Knotens durch einen ersten Client mittels des virtuellen Server-Objekts, und
- FIG 6: den Zugriff eines zweiten Client auf einen virtuellen Server-Knoten und Reaktionen des Servers und des ersten Client auf den Zugriff.

Einander entsprechende Teile sind in allen Figuren mit den gleichen Bezugszeichen versehen.

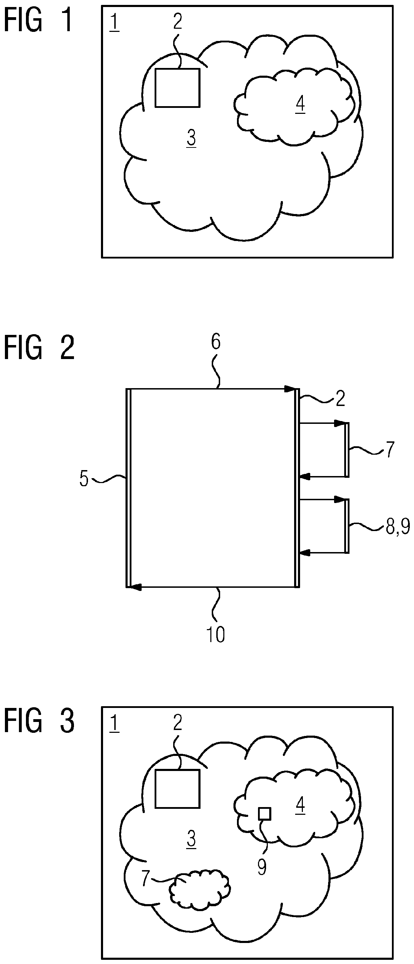

Figur 1 zeigt einen Zustand eines Servers 1, in dem ein virtuelles Server-Objekt 2 implementiert ist, vor einer Anmeldung eines Client bei dem virtuellen Server-Objekt 2. Das virtuelle Server-Objekt 2 und weitere Knoten 4 des Servers 1 sind in einem Adressraum 3 des Servers 1 abgelegt.

Figur 2 zeigt eine Anmeldung eines ersten Client 5 bei dem virtuellen Server-Objekt 2 des in Figur 1 dargestellten Servers 1. Der erste Client 5 sendet eine Anmeldungsnachricht 6 an den Server 1. Die Anmeldungsnachricht 6 enthält einen Aufruf einer Methode des virtuellen Server-Objektes 2 zur Anmeldung bei dem virtuellen Server-Objekt 2. Das virtuelle Server-Objekt 2 erzeugt daraufhin für den ersten Client 5 in dem Adressraum 3 des Servers 1 einen virtuellen Adressraum 7 an sowie eine OPC-UA Subscription 8 mit einer als Subscription-Variable ausgebildeten Subscription-Entität 9. Außerdem erzeugt das virtuelle Server-Objekt 2 eine Subscription-Bestätigungsnachricht 10, die eine Information über den erstellten virtuellen Adressraum 7 und eine eindeutige Subscription-ID, d.h. eine eindeutige Identifikatornummer für die OPC-UA Subscription 8, enthält.

Figur 3 zeigt einen Zustand des in Figur 1 dargestellten Servers 1 nach der in Figur 2 dargestellten Anmeldung des ersten Client 5 bei dem virtuellen Server-Objekt 2. Im Unterschied zu dem in Figur 1 dargestellten Zustand enthält der Adressraum 3 des Servers 1 nunmehr den von dem virtuellen Server-Objekt 2 erzeugten virtuellen Adressraum 7 und die Subscription-Entität 9.

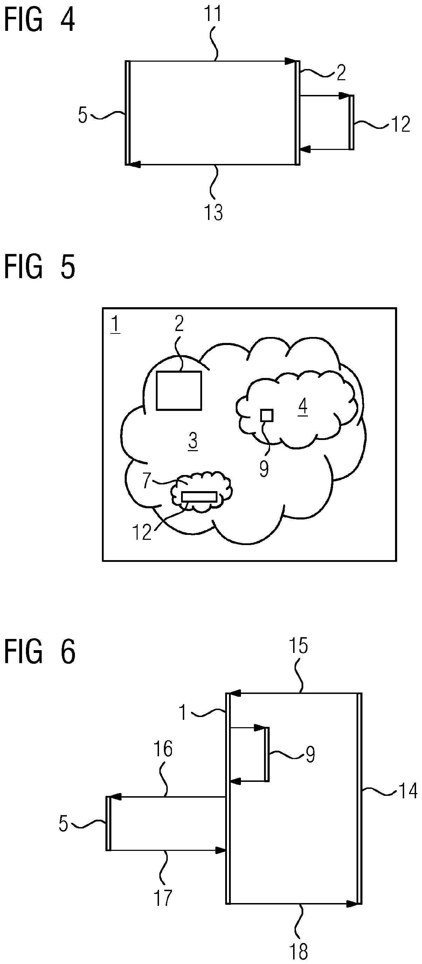

Figur 4 zeigt das Anlegen eines als eine Variable ausgebildeten virtuellen Server-Knotens 12 durch den ersten Client 5 mittels des virtuellen Server-Objekts 2 des in Figur 1 dargestellten Servers 1. Der erste Client 5 sendet eine Erzeugungsanforderung 11 an den Server 1, die einen Aufruf einer Methode des virtuellen Server-Objekts 2 zur Erzeugung des virtuellen Server-Knotens 12 enthält. Das virtuelle Server-Objekt 2 legt daraufhin den virtuellen Server-Knoten 12 im virtuellen Adressraum 7 für den ersten Client 5 an und sendet eine Erzeugungsbestätigung 13, die das Anlegen des virtuellen Server-Knotens 12 bestätigt, an den ersten Client 5.

Figur 5 zeigt einen Zustand des in Figur 1 dargestellten Servers 1 nach dem in Figur 4 dargestellten Anlegen des virtuellen Server-Knotens 12 durch den ersten Client 5 mittels des virtuellen Server-Objekts 2. Im Unterschied zu dem in Figur 3 dargestellten Zustand enthält der virtuelle Adressraum 7 für den ersten Client 5 nunmehr den virtuellen Server-Knoten 12.
Figur 6 zeigt den Zugriff eines zweiten Client 14 auf den virtuellen Server-Knoten 12, der gemäß Figur 4 durch den ersten Client 5 mittels des virtuellen Server-Objekts 2 angelegt wurde, sowie Reaktionen des Servers 1 und des ersten Client 5 auf diesen Zugriff. Der zweite Client 14 sendet eine Leseanforderung 15 an den Server 1, um den Wert des virtuellen Server-Knotens 12 anzufragen. Daraufhin ändert der Server 1 den Wert der als Subscription-Variable ausgebildeten Subscription-Entität 9. Diese Wertänderung teilt der Server 1 dem ersten Client 5 durch eine Wertänderungsnachricht 16 mit. Der erste Client 5 sendet dem Server 1 eine Schreibanforderung 17, die einen Wert des virtuellen Server-Knotens 12 und einen Aufruf einer Methode des virtuellen Server-Objekts 2 zum Schreiben dieses Wertes enthält. Das Server-Objekt 2 aktualisiert daraufhin entsprechend den Wert des virtuellen Server-Knotens 12 und der Server 1 sendet dem zweiten Client 14 eine Wertmitteilung 18, die dem zweiten Client 14 den aktuellen Wert des virtuellen Server-Knotens 12 mitteilt.
Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, im Rahmen der folgenden Ansprüche.

### Bezugszeichenliste

- 1: Server
- 2: virtuelles Server-Objekt
- 3: Adressraum
- 4: weiterer Knoten
- 5: erster Client
- 6: Anmeldungsnachricht
- 7: virtueller Adressraum
- 8: Subscription
- 9: Subscription-Entität
- 10: Subscription-Bestätigungsnachricht
- 11: Erzeugungsanforderung
- 12: virtueller Server-Knoten
- 13: Erzeugungsbestätigung
- 14: zweiter Client
- 15: Leseanforderung
- 16: Wertänderungsnachricht
- 17: Schreibanforderung
- 18: Wertmitteilung

## Patentansprüche

1. Verfahren zur Kommunikation zweier OPC-UA Clients (5, 14) über einen OPC-UA Server (1) in einem Netzwerk mittels OPC-UA, wobei
- in dem OPC-UA Server (1) ein virtuelles Server-Objekt (2) implementiert wird, das einem ersten (5) der beiden OPC-UA Clients (5, 14) eine Funktionalität eines OPC-UA Servers (2) verleiht, indem es für den ersten OPC-UA Client (5) einen virtuellen Adressraum (7) in einem Adressraum (3) des OPC-UA Servers (1) und eine Methode zur Erzeugung und Änderung virtueller Server-Knoten (12) in dem virtuellen Adressraum (7) bereitstellt,
- der OPC-UA Server (1) dem zweiten OPC-UA Client (14) ermöglicht, auf virtuelle Server-Knoten (12) in dem virtuellen Adressraum (7) zuzugreifen, und
- der OPC-UA Server (1) dem ersten OPC-UA Client (5) jeden Zugriff des zweiten OPC-UA Client (14) auf einen virtuellen Server-Knoten (12) in dem virtuellen Adressraum (7) mitteilt, wobei der OPC-UA Server (1) für den ersten Client (5) eine Subscription (8) erzeugt, und die Subscription (8) eine Subscription-Entität (9) enthält, auf deren Änderung der erste OPC-UA Client (5) angemeldet wird und die der OPC-UA Server (1) bei einem Zugriff des zweiten OPC-UA Client (14) auf einen virtuellen Server-Knoten (12) in dem virtuellen Adressraum (7) ändert **dadurch gekennzeichnet, dass**
- der zweite Client (14) eine Leseanforderung (15) an den Server (1) sendet, um den Wert des virtuellen Server-Knotens (12) anzufragen,
- der Server (1) den Wert der als Subscription-Variable ausgebildeten Subscription-Entität (9) ändert, und dem ersten Client (5) durch eine Wertänderungsnachricht (16) mitteilt, -
- der erste Client (5) dem Server (1) eine Schreibanforderung (17) sendet, die einen Wert des virtuellen Server-Knotens (12) und einen Aufruf einer Methode des virtuellen Server-Objekts (2) zum Schreiben dieses Wertes enthält,
- das Server-Objekt (2) den Wert des virtuellen Server-Knotens (12) aktualisiert und
- der Server (1) dem zweiten Client (14) eine Wertmitteilung (18) sendet, die dem zweiten Client (14) den aktuellen Wert des virtuellen Server-Knotens (12) mitteilt.

2. Verfahren nach Anspruch 1,
**dadurch gekennzeichnet, dass** mittels der Methode zur Erzeugung und Änderung virtueller Server-Knoten (12) als virtuelle Server-Knoten (12) Variablen erzeugbar sind und als Änderung einer Variable ein Wert der Variable veränderbar ist.

3. Verfahren nach Anspruch 1 oder 2,
**dadurch gekennzeichnet, dass** der OPC-UA Server (1) für den ersten OPC-UA Client (5) die Subscription (8) erzeugt, über die der OPC-UA Server (1) dem ersten OPC-UA Client (5) jeden Zugriff des zweiten OPC-UA Client (14) auf einen virtuellen Server-Knoten (12) in dem virtuellen Adressraum (7) mitteilt.

4. Verfahren nach einem der vorherigen Ansprüche,
**dadurch gekennzeichnet, dass** als Subscription-Entität (9) eine Subscription-Variable verwendet wird, auf deren Wertänderung der erste OPC-UA Client (5) angemeldet wird und deren Wert der OPC-UA Server (1) bei einem Zugriff des zweiten OPC-UA Client (14) auf einen virtuellen Server-Knoten (12) in dem virtuellen Adressraum (7) ändert.

5. Verfahren nach einem der Ansprüche 3 bis 4,
**dadurch gekennzeichnet, dass** die Subscription (8) von dem virtuellen Server-Objekt (2) erzeugt wird.

6. Verfahren nach einem der vorhergehenden Ansprüche, **dadurch gekennzeichnet, dass** sich der erste OPC-UA Client (5) bei dem virtuellen Server-Objekt (2) durch einen Methodenaufruf anmeldet.

## Claims

1. Method for communication between two OPC-UA clients (5, 14) via an OPC-UA server (1) in a network using OPC-UA,
- a virtual server object (2) being implemented in the OPC-UA server (1), which virtual server object provides a first (5) of the two OPC-UA clients (5, 14) with a functionality of an OPC-UA server (2) by providing the first OPC-UA client (5) with a virtual address space (7) in an address space (3) of the OPC-UA server (1) and a method for generating and changing virtual server nodes (12) in the virtual address space (7),
- the OPC-UA server (1) making it possible for the second OPC-UA client (14) to access virtual server nodes (12) in the virtual address space (7), and
- the OPC-UA server (1) informing the first OPC-UA client (5) each time the second OPC-UA client (14) accesses a virtual server node (12) in the virtual address space (7),
wherein the OPC-UA server (1) generates a subscription (8) for the first client (5),
and the subscription (8) contains a subscription entity (9), in response to the change in which the first OPC-UA client (5) is registered and which is changed by the OPC-UA server (1) when the second OPC-UA client (14) accesses a virtual server node (12) in the virtual address space (7),
**characterized in that**
- the second client (14) transmits a read request (15) to the server (1) in order to request the value of the virtual server node (12),
- the server (1) changes the value of the subscription entity (9) in the form of a subscription variable and notifies the first client (5) by means of a value change message (16),
- the first client (5) transmits a write request (17) to the server (1), said write request containing a value of the virtual server node (12) and a call of a method of the virtual server object (2) for writing this value,
- the server object (2) updates the value of the virtual server node (12), and
- the server (1) transmits a value notification (18) to the second client (14), said value notification notifying the second client (14) of the current value of the virtual server node (12).

2. Method according to Claim 1,
**characterized in that** variables can be generated as virtual server nodes (12) and a value of the variable can be changed as the change in a variable using the method for generating and changing virtual server nodes (12).

3. Method according to Claim 1 or 2,
**characterized in that** the OPC-UA server (1) generates the subscription (8) for the first OPC-UA client (5), via which subscription the OPC-UA server (1) informs the first OPC-UA client (5) each time the second OPC-UA client (14) accesses a virtual server node (12) in the virtual address space (7).

4. Method according to one of the preceding claims,
**characterized in that** a subscription variable is used as the subscription entity (9), in response to the value change in which the first OPC-UA client (5) is registered and whose value is changed by the OPC-UA server (1) when the second OPC-UA client (14) accesses a virtual server node (12) in the virtual address space (7).

5. Method according to either of Claims 3 and 4,
**characterized in that** the subscription (8) is generated by the virtual server object (2).

6. Method according to one of the preceding claims,
**characterized in that** the first OPC-UA client (5) registers with the virtual server object (2) by means of a method call.

## Revendications

1. Procédé de communication entre deux clients OPC-UA (5, 14) par l'intermédiaire d'un serveur OPC-UA (1) dans un réseau en utilisant le standard OPC-UA, dans lequel
- un objet de serveur (2) virtuel est mis en place dans le serveur OPC-UA (1), lequel objet octroie à un premier (5) des deux clients OPC-UA (5, 14) une fonctionnalité d'un serveur OPC-UA, en fournissant au premier client OPC-UA (5) un espace d'adresse (7) virtuel dans un espace d'adresse (3) du serveur OPC-UA (1) et une méthode pour générer et modifier des noeuds de serveur virtuels (12) dans l'espace d'adresse virtuel (7),
- le serveur OPC-UA (1) permet au second client OPC-UA (14) d'accéder à des noeuds de serveur virtuels (12) dans l'espace d'adresse virtuel (7),
- le serveur OPC-UA (1) communique au premier client OPC-UA (5) chaque accès du second client OPC-UA (14) à un noeud de serveur (12) virtuel dans l'espace d'adresse virtuel (7),
et dans lequel le serveur OPC-UA (1) génère pour le premier client (5) un abonnement (8),
et l'abonnement (8) contient une entité d'abonnement (9), du changement de laquelle le premier client OPC-UA (5) est averti et que le serveur OPC-UA (1) modifie lors d'un accès du second client OPC-UA (14) à un noeud de serveur virtuel (12) dans l'espace d'adresse (7) virtuel, **caractérisé en ce que**
- le second client (14) envoie une requête de lecture (15) au serveur (1) pour demander la valeur du noeud de serveur virtuel (12),
- le serveur (1) modifie la valeur de l'entité d'abonnement conçue comme une variable d'abonnement (9), et la communique au premier client (5) par une notification de modification de valeur (16),
- le premier client (5) envoie une requête d'écriture (17) au serveur (1), qui contient une valeur du noeud de serveur (12) virtuel et l'appel d'une méthode de l'objet de serveur virtuel (2) pour écrire cette valeur,
- l'objet de serveur (2) met à jour la valeur du noeud de serveur virtuel (12) et
- le serveur (1) envoie au second client (14) une notification de valeur (18) qui communique au second client (14) la valeur instantanée du noeud de serveur (12) virtuel.

2. Procédé selon la revendication 1,
**caractérisé en ce que** des variables peuvent être générées sous forme de noeuds de serveur virtuels (12) au moyen de la méthode de production et de modification de noeuds de serveur virtuels (12) et une valeur de la variable peut être modifiée en tant que variation d'une variable.

3. Procédé selon la revendication 1 ou 2,
**caractérisé en ce que** le serveur OPC-UA (1) génère pour le premier client OPC-UA (5) l'abonnement (8) par l'intermédiaire duquel le serveur OPC-UA (1) communique au premier client OPC-UA (5) chaque accès du second client OPC-UA (14) à un noeud de serveur virtuel (12) dans l'espace d'adresse (7) virtuel.

4. Procédé selon l'une des revendications précédentes,
**caractérisé en ce qu'**une variable d'abonnement est utilisée en tant qu'entité d'abonnement (9), de la variation de laquelle le premier client OPC-UA (5) est averti et dont la valeur est modifiée par le serveur OPC-UA (1) lors d'un accès du second client OPC-UA (14) à un noeud de serveur (12) virtuel dans l'espace d'adresse (7) virtuel.

5. Procédé selon l'une des revendications 3 ou 4,
**caractérisé en ce que** l'abonnement (8) est généré par l'objet de serveur (2) virtuel.

6. Procédé selon l'une des revendications précédentes,
**caractérisé en ce que** le premier client OPC-UA (5) s'enregistre auprès de l'objet de serveur virtuel (2) par une méthode d'appel.
